# EUROPEAN PATENT APPLICATION

(11) **EP 4 796 440 A1**
(43) Date of publication of application: **26.08.2026**
(21) Application number: 23962630.2
(22) Date of filing: 27.12.2023
(51) Int. Cl.: B64C 27/22, B64C 27/28

(54) **AIRCRAFT**

(71) Applicant: SZ Shanzhi Technology Co., Ltd., Shenzhen, Guangdong 518000 (CN)
(72) Inventor: ZHOU, Weixiang, Shenzhen, Guangdong 518000 (CN)
(74) Representative: Goddar, Heinz J.
(86) International application number: PCT/CN2023/142445
(87) International publication number: WO 2025/137945

(57) **Abstract**

The present application provides an aircraft, including a rotor mechanism and a tail fin mechanism. The rotor mechanism is configured to at least provide lift for the aircraft, and the rotor mechanism includes a first rotor component. The tail mechanism includes a first tail fin and a second tail fin. The first tail fin is configured to at least provide stability in a first direction when the aircraft is flying, and the second tail fin is configured to at least provide stability in a second direction when the aircraft is flying, where the first direction is different from the second direction. The first rotor component is arranged close to the tail fin mechanism, and when the first rotor component is at least used to provide lift, one of the first tail fin and the second tail fin has an orthographic projection on a plane of a rotation circle of the first rotor component outside the rotation circle, and the other has an orthographic projection on the plane of the rotation circle of the first rotor component at least partially within the rotation circle. The aircraft provided in the present application has a reasonable structural design and can achieve both good aerodynamic performance and a relatively small size.

## Description

### Technical Field

The present application relates to the technical field of aircraft, and in particular to an aircraft.

### Background Art

With the continuous development of technology, aircraft have been increasingly widely used in people's lives and work, for example, in the fields of aerial photography, agriculture, express delivery, wildlife observation, surveying and mapping, power inspection, and disaster relief. However, in the related art, the structural design of aircraft, especially aircraft that do not have strict requirements on takeoff and landing sites or takeoff and landing airspace, is relatively unreasonable. For example, in order to obtain corresponding aerodynamic performance, the size is relatively large, or in order to realize different functions, the structure is relatively complex.

### Summary of the Invention

The present application provides an aircraft, aiming to make the structural design of the aircraft reasonable.

An embodiment of the present application provides an aircraft, including: a rotor mechanism, the rotor mechanism being configured to at least provide lift for the aircraft, the rotor mechanism including a first rotor component; and
a tail fin mechanism, the tail fin mechanism including a first tail fin and a second tail fin, the first tail fin being configured to play a stabilizing role at least in a first direction when the aircraft is flying, the second tail fin being configured to play a stabilizing role at least in a second direction when the aircraft is flying, the first direction being different from the second direction, where
the first rotor component is arranged close to the tail fin mechanism, and when the first rotor component is at least used to provide lift, an orthographic projection of one of the first tail fin and the second tail fin on a plane of a rotation circle of the first rotor component is outside the rotation circle, and an orthographic projection of the other on the plane of the rotation circle of the first rotor component is at least partially within the rotation circle.

Another embodiment of the present application provides an aircraft, including:
a body;
a tail fin mechanism, arranged on the body, the tail fin mechanism including a first tail fin and a second tail fin, the first tail fin being configured to provide stability in at least a first direction when the aircraft is flying, the second tail fin being configured to provide stability in at least a second direction when the aircraft is flying, the first direction being different from the second direction, where
at least part of at least one of the first tail fin and the second tail fin extends from the body in a pitch direction of the aircraft to form a landing gear of the aircraft.

Another embodiment of the present application provides an aircraft, including:
a rotor mechanism, the rotor mechanism being configured to at least provide lift to the aircraft, the rotor mechanism including a first rotor component and a bearing member configured to support the first rotor component; and
a tail fin mechanism, the tail fin mechanism including a first tail fin and a second tail fin, the first tail fin being configured to provide stability in at least a first direction when the aircraft is flying, the second tail fin being configured to provide stability in at least a second direction when the aircraft is flying, the first direction being different from the second direction, where
the first rotor component is arranged close to the tail fin mechanism, and when the first rotor component is at least used to provide lift, the tail fin mechanism and the first rotor component are located on upper and lower sides of the bearing member, respectively, and at least one of the first tail fin and the second tail fin at least partially overlaps a projection of a rotor disk of the first rotor component along a height direction.

Yet another embodiment of the present application provides an aircraft, including:
a body;
a rotor mechanism, the rotor mechanism being configured to at least provide lift to the aircraft, the rotor mechanism including a first rotor component and a bearing member configured to support the first rotor component, the first rotor component being located at a rearmost position of the body compared to other rotor components; and
a tail fin mechanism, the tail fin mechanism including a first tail fin and a second tail fin, the first tail fin being configured to provide stability in at least a first direction when the aircraft is flying, the second tail fin being configured to provide stability in at least a second direction when the aircraft is flying, the first direction being different from the second direction; and
a main wing, connected to the body and configured to provide lift, where
the tail fin mechanism cooperatively forms a closed structure with the body, the main wing, and the bearing member.

In the aircraft provided in the embodiments of the present application, when the first rotor component is at least used to provide lift, one of the first tail fin and the second tail fin has an orthographic projection on the plane where the rotation circle of the first rotor assembly is located positioned outside the rotation circle, and the other has an orthographic projection on the plane where the rotation circle of the first rotor assembly is located at least partially positioned within the rotation circle. Therefore, while reducing the airflow disturbance of the tail fin mechanism to the first rotor component, the size of the aircraft can also be reduced to a certain extent, so that the structure of the aircraft is more compact, the structural design of the aircraft is more reasonable, and both good aerodynamic performance and a relatively small size can be achieved.

### Brief Description of the Drawings

In order to clearly illustrate the technical solutions of the embodiments of the present application, the drawings for the description of the embodiments will be briefly introduced below. Obviously, the drawings described below are merely some embodiments of the present application. For a person skilled in the art, other drawings may also be obtained based on these drawings without creative efforts.
FIG. 1 is a schematic structural diagram of an aircraft provided in an embodiment of the present application;
FIG. 2 is a top view of an aircraft provided in an embodiment of the present application, in which only a portion of the aircraft is shown;
FIG. 3 is a side view of an aircraft provided in an embodiment of the present application;
FIG. 4 is a partial schematic diagram of the aircraft shown in FIG. 3;
FIG. 5 is a top view of an aircraft provided in an embodiment of the present application, in which only a portion of the aircraft is shown;
FIG. 6 is a side view of an aircraft provided in an embodiment of the present application;
FIG. 7 is a partial structural schematic diagram of an aircraft provided in an embodiment of the present application;
FIG. 8 is a schematic structural diagram of an aircraft provided in an embodiment of the present application; and
FIG. 9 is a schematic structural diagram of an aircraft provided in an embodiment of the present application.

Description of reference numerals:
100, aircraft;
10, rotor mechanism; 11, first rotor component; 111, first rotor; 112, first axis; 12, second rotor component; 121, second rotor; 1211, second propeller; 13, third rotor component; 131, third rotor; 1311, third propeller; 132, tip;
20, tail fin mechanism; 21, first tail fin; 22, second tail fin; 221, first end; 222, second end; 23, contact end; 231, first contact end; 232, second contact end;
30, body; 40, front landing gear; 50, main wing; 60, bearing member; 70, closed structure.

### Detailed Description

The technical solutions in the embodiments of the present application will be clearly and completely described below with reference to the drawings in the embodiments of the present application. Obviously, the described embodiments are only a part of the embodiments of the present application, rather than all of the embodiments. Based on the embodiments of the present application, all other embodiments obtained by a person skilled in the art without creative efforts shall fall within the protection scope of the present application.

In the description of the present application, it should be understood that the terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," and the like indicating orientations or positional relationships are based on the orientations or positional relationships shown in the drawings, and are merely for the convenience of describing the present application and simplifying the description, rather than indicating or implying that the device or element referred to must have a particular orientation or be constructed and operated in a particular orientation, and therefore should not be construed as limiting the present application. In addition, the terms "first" and "second" are used for descriptive purposes only and should not be construed as indicating or implying relative importance or implicitly indicating the number of the indicated technical features. Thus, the features defined as "first" and "second" may explicitly or implicitly include one or more of the features. In the description of the present application, the term "a plurality of" means two or more, unless otherwise specifically defined.

It should also be understood that the terms used in the specification of the present application are only for the purpose of describing specific embodiments and are not intended to limit the present application. As used in the specification of the present application and the appended claims, unless the context clearly indicates otherwise, the singular forms "a," "an," and "the" are intended to include the plural forms.

It should be further understood that the term "and/or" as used in the specification of the present application and the appended claims refers to any and all possible combinations of one or more of the associated listed items and includes such combinations.

Some embodiments of the present application will be described in detail below with reference to the accompanying drawings. In the absence of conflict, the following embodiments and the features in the embodiments may be combined with each other.

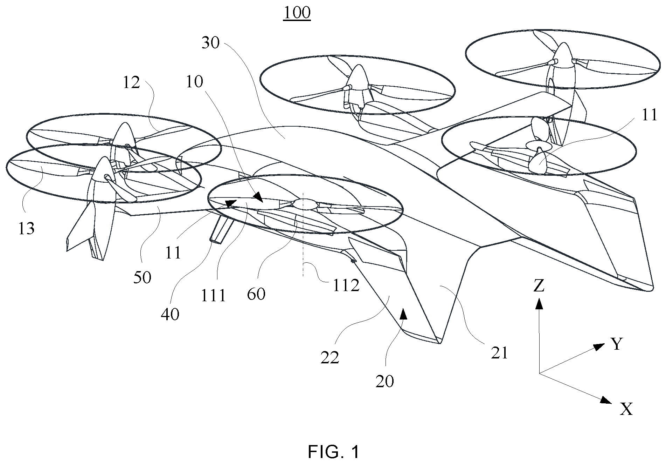

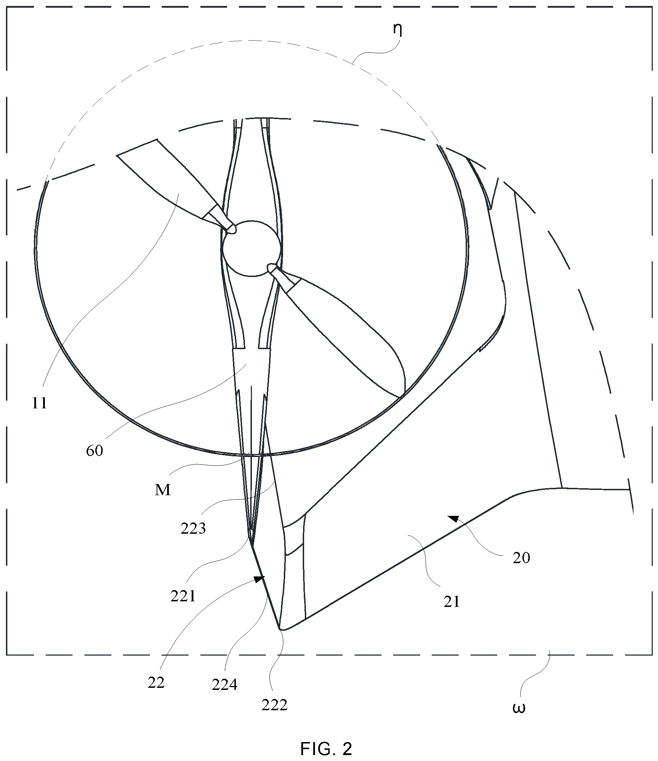

With reference to FIG. 1 and FIG. 2, some embodiments of the present application provide an aircraft 100, including a rotor mechanism 10 and a tail fin mechanism 20. The rotor mechanism 10 is configured to at least provide lift for the aircraft 100, and the rotor mechanism 10 includes a first rotor component 11. The tail fin mechanism 20 includes a first tail fin 21 and a second tail fin 22. The first tail fin 21 is configured to at least play a stabilizing role in a first direction when the aircraft 100 is flying, and the second tail fin 22 is configured to at least play a stabilizing role in a second direction when the aircraft 100 is flying, the first direction being different from the second direction.

In some embodiments, the first rotor component 11 is disposed close to the tail fin mechanism 20. When the first rotor component 11 is at least used to provide lift, the orthographic projection of one of the first tail fin 21 and the second tail fin 22 on the plane where the rotation circle of the first rotor component 11 is located is located outside the rotation circle, and the orthographic projection of the other one on the plane where the rotation circle of the first rotor component 11 is located is at least partially located within the rotation circle. Since the orthographic projection of one of the first tail fin 21 and the second tail fin 22 on the plane where the rotation circle of the first rotor component 11 is located is located outside the rotation circle, it is possible to reduce as much as possible the blocking of the airflow generated when the first rotor component 11 operates by the first tail fin 21 or the second tail fin 22, reduce the airflow disturbance of the tail fin mechanism 20 to the first rotor component 11, thereby reducing the flight power loss provided by the first rotor component 11 for the aircraft 100 during operation, and improving the aerodynamic performance of the aircraft 100. Since the orthographic projection of the other one of the first tail fin 21 and the second tail fin 22 on the plane where the rotation circle of the first rotor component 11 is located is at least partially located within the rotation circle, it is possible to reduce the size of the aircraft 100 to a certain extent, so that the structure of the aircraft 100 is more compact, which is beneficial to realizing the miniaturized design of the aircraft 100. The reduction in the size of the aircraft 100 can also reduce the weight of the aircraft 100 and reduce the inertia of the whole machine to a certain extent. The aircraft 100 in the embodiments of the present application has a reasonable structural design and a simple structure, and can achieve both good aerodynamic performance and a small size.

Exemplarily, the first tail fin 21 includes a horizontal tail fin, and the second tail fin 22 includes a vertical tail fin. In other embodiments, the first tail fin 21 includes a vertical tail fin, and the second tail fin 22 includes a horizontal tail fin.

In some embodiments, the first direction is the pitch direction of the aircraft 100, and the second direction is the yaw direction of the aircraft 100. In other embodiments, the first direction may also be other directions except the pitch direction of the aircraft 100, and the second direction may also be other directions except the yaw direction of the aircraft 100, as long as the first direction is different from the second direction.

Exemplarily, a body coordinate system is introduced, and the body coordinate system is a right-handed system. The X-axis is defined as the front-rear direction of the body, pointing from front to rear; the Z-axis is the up-down direction of the body, pointing from down to up; and the Y-axis is the left-right direction of the body, and the specific direction is determined based on the XZ plane.

Exemplarily, the pitch direction of the aircraft 100 is consistent with the direction of the yaw axis, and the yaw direction of the aircraft 100 is consistent with the direction of the pitch axis. Exemplarily, the roll axis direction is the front-rear direction of the aircraft 100 or the direction where the X-axis shown in FIG. 1 is located, the pitch axis direction is the left-right direction of the aircraft 100 or the direction where the Y-axis shown in FIG. 1 is located, and the yaw axis direction is the up-down direction of the aircraft 100 or the direction where the Z-axis shown in FIG. 1 is located.

Exemplarily, the pitch direction of the aircraft 100 is the up-down direction of the aircraft 100. The yaw direction of the aircraft 100 is the left-right direction of the head of the aircraft 100.

Exemplarily, the first direction is the up-down direction of the aircraft 100. The second direction is the left-right direction of the head of the aircraft 100.

With reference to FIG. 1, in some embodiments, the first rotor component 11 includes a first rotor 111 and a first driving mechanism (not shown). The first driving mechanism is configured to drive the first rotor 111 to provide lift. In some embodiments, the first rotor component 11 is configured to provide lift for the aircraft 100. For example, the first rotor component 11 may be a non-tiltable rotor component, and the first rotor component 11 is configured to provide lift for the aircraft 100. In other embodiments, the first rotor component 11 may also be a tiltable rotor component. The first rotor component 11 is driven to tilt by a tilting driving mechanism (not shown), so that the first rotor component 11 can provide lift for the aircraft 100 when the aircraft 100 takes off and lands vertically, and provide thrust for the aircraft 100 when the aircraft 100 cruises in level flight.

With reference to FIG. 1, exemplarily, the first rotor 111 can rotate about a first rotation axis 112. The first rotation axis 112 is consistent with the ascending or descending direction of the aircraft 100, so that the first driving mechanism can drive the first rotor 111 to rotate, thereby providing lift for the aircraft 100, and further driving the aircraft 100 to ascend, descend, or hover.

Exemplarily, the first rotor 111 includes a first propeller, and the first driving mechanism is configured to drive the first propeller to rotate. The first driving mechanism may include any suitable type of motor such as a brushed motor or a brushless motor.

Exemplarily, the rotation circle of the first rotor component 11 is as shown by circle η in FIG. 2. Exemplarily, the rotation circle of the first rotor component 11 is perpendicular to the first rotation axis 112. Exemplarily, the rotation circle of the first rotor component 11 is the motion trajectory of the tip of the first rotor 111 of the first rotor component 11 when rotating about the first rotation axis 112.

Exemplarily, the plane where the rotation circle of the first rotor component 11 is located is as shown by plane ω in FIG. 2.

Exemplarily, the orthographic projection of the first tail fin 21 on the plane where the rotation circle of the first rotor component 11 is located is outside the rotation circle, and at least includes: the orthographic projection of the first tail fin 21 on the plane where the rotation circle of the first rotor component 11 is located being tangent to the rotation circle, and except for the tangential portion, the orthographic projection of the remaining part of the first tail fin 21 on the plane where the rotation circle of the first rotor component 11 is located is outside the rotation circle; the orthographic projection of the first tail fin 21 on the plane where the rotation circle of the first rotor component 11 is located is outside the rotation circle, so that the orthographic projection of the first tail fin 21 on the plane where the rotation circle of the first rotor component 11 is located is distributed with a spacing relative to the rotation circle of the first rotor component 11. The orthographic projection of the second tail fin 22 on the plane where the rotation circle of the first rotor component 11 is located is outside the rotation circle. This can be understood with reference to the orthographic projection of the first tail fin 21 on the plane where the rotation circle of the first rotor component 11 is located being outside the rotation circle, and will not be repeated herein.

In some embodiments, when the first rotor component 11 is used to provide lift, the orthographic projection of the second tail fin 22 on the plane where the rotation circle of the first rotor component 11 is located is outside the rotation circle. Exemplarily, when the first rotor component 11 is used to provide lift, the orthographic projection of the second tail fin 22 on the plane where the rotation circle of the first rotor component 11 is located is outside the rotation circle, and the orthographic projection of the first tail fin 21 on the plane where the rotation circle of the first rotor component 11 is located is at least partially within the rotation circle. This can not only reduce the airflow disturbance of the tail fin mechanism 20 to the first rotor component 11, but also reduce the length of the aircraft 100 to a certain extent, for example, reducing the length of the body 30, so that the structure of the aircraft 100 is more compact, which is beneficial for reducing the volume, weight, and overall inertia of the aircraft 100, and is also beneficial for lowering costs. Exemplarily, the length of the aircraft 100 refers to the length of the aircraft 100 along the front-rear direction of the aircraft 100.

With reference to FIG. 2, in some embodiments, when the first rotor component 11 is used to provide lift, the orthographic projection of the first tail fin 21 on the plane where the rotation circle of the first rotor component 11 is located is outside the rotation circle. Exemplarily, when the first rotor component 11 is used to provide lift, the orthographic projection of the first tail fin 21 on the plane where the rotation circle of the first rotor component 11 is located is outside the rotation circle, and the orthographic projection of the second tail fin 22 on the plane where the rotation circle of the first rotor component 11 is located is at least partially within the rotation circle. In this way, it is possible not only to reduce the airflow disturbance of the tail fin mechanism 20 to the first rotor component 11, but also to reduce the length of the aircraft 100 to a certain extent, for example, reducing the length of the bearing member 60 used to support the first rotor component 11. This makes the structure of the aircraft 100 more compact, which is beneficial for reducing the volume, weight, and overall inertia of the aircraft 100, and is also beneficial for lowering costs.

With reference to FIG. 2, in some embodiments, the second tail fin 22 is disposed near the end of the first rotor component 11 in the orthographic projection on the plane where the rotation circle of the first rotor component 11 is located. The second tail fin 22 intersects with the rotation circle in the front-rear direction of the aircraft 100 or the roll axis direction to reduce the size of the aircraft 100 in the front-rear direction or the roll axis direction. This makes the structure of the aircraft 100 more compact, which is beneficial for reducing the volume, weight, and overall inertia of the aircraft 100, and is also beneficial for lowering costs. In some embodiments, the second tail fin 22 includes a first end 221 and a second end 222 disposed opposite each other. The first end 221 is disposed near the first rotor component 11, and the orthographic projection of the first end 221 on plane ω intersects with the rotation circle at point M in the front-rear direction of the aircraft 100. Exemplarily, in the orthographic projection of the first end 221 on plane ω, point M serves as a boundary, with one part of the first end 221 located within the rotation circle and the other part located outside the rotation circle. In other embodiments, the orthographic projection of the first end 221 on plane ω may also be entirely located within the rotation circle.

Exemplarily, the second end 222 is located outside the rotation circle in the orthographic projection on the plane where the rotation circle of the first rotor component 11 is located, so as to achieve both good aerodynamic performance and a small volume. In other embodiments, the orthographic projection of the second end 222 on the plane where the rotation circle of the first rotor component 11 is located may also be at least partially within the rotation circle.

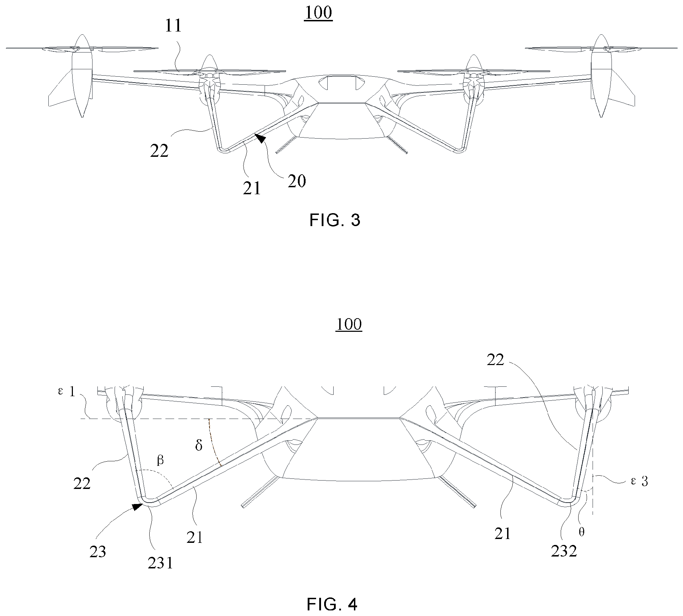

With reference to FIG. 3, in some embodiments, in response to the first rotor component 11 being used to provide lift, the tail fin mechanism 20 is disposed opposite the blades of the first rotor component 11 on both sides of the blade hub in the first rotor component 11; for example, the tail fin mechanism 20 is located below the first rotor component 11. Since the tail fin mechanism 20 is disposed opposite the blades of the first rotor component 11 on both sides of the blade hub in the first rotor component 11, when the first rotor component 11 operates, the tail fin mechanism 20 will not come into contact with the first rotor component 11 and cause physical interference. When designing the aircraft 100, it is not necessary to consider the radius of the rotation circle of the first rotor component 11, which lowers the requirements for the relative position between the first rotor component 11 and the tail fin mechanism 20, making the design positions of the first rotor component 11 and the tail fin mechanism 20 more flexible. Furthermore, this makes it possible for the tail fin mechanism 20 to be disposed near the head of the aircraft 100 in the front-rear direction. This helps reduce the length of the aircraft 100, makes the structure of the aircraft 100 more compact, is conducive to realizing a miniaturized design of the aircraft 100, and to a certain extent reduces the weight and overall inertia of the aircraft 100.

With reference to FIG. 4, in some embodiments, the anhedral angle δ of the first tail fin 21 ranges from [15°, 45°]. For example, the anhedral angle of the first tail fin 21 may be 15°, 20°, 30°, 40°, 45°, or any other suitable value between 15° and 45°. The anhedral angle δ of the first tail fin 21 refers to the angle between the first tail fin 21 and the ε1 plane. Exemplarily, the ε1 plane is a horizontal plane or the XY plane shown in FIG. 1.

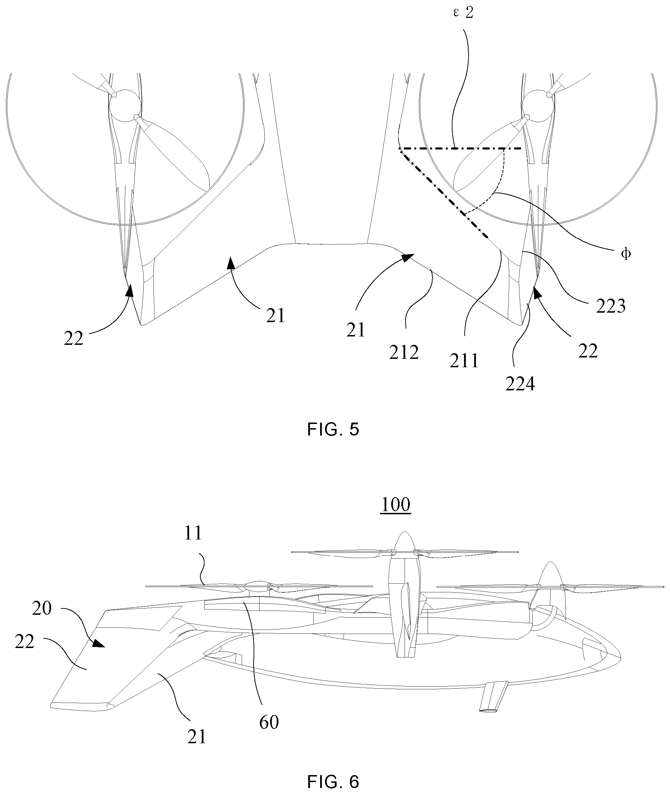

With reference to FIG. 5, in some embodiments, the front edge sweep angle φ of the first tail fin 21 ranges from (-60°, 50°] to reduce the blocking of airflow generated when the first rotor component 11 operates, reduce the airflow disturbance of the first tail fin 21 to the first rotor component 11, and improve the aerodynamic performance of the aircraft 100. The front edge sweep angle of the first tail fin 21 is greater than -60° and less than or equal to 50°. For example, the front edge sweep angle of the first tail fin 21 may be -55°, -30°, 0°, 10°, 30°, 45°, 50°, or any other suitable value between -60° and 50°.

In some embodiments, the rear edge sweep angle of the first tail fin 21 ranges from (-60°, 50°]. For example, the rear edge sweep angle of the first tail fin 21 is greater than -60° and less than or equal to 50°. For example, the front edge sweep angle of the first tail fin 21 may be -55°, -30°, 0°, 10°, 30°, 45°, 50°, or any other suitable value between -60° and 50°.

With reference to FIG. 5, exemplarily, the first tail fin 21 includes a front edge 211 and a rear edge 212. The front edge sweep angle φ of the first tail fin 21 is the angle between the front edge 211 of the first tail fin 21 and the ε2 plane. The rear edge sweep angle of the first tail fin 21 is the angle between the rear edge 212 of the first tail fin 21 and the ε2 plane. Here, the ε2 plane is the YZ plane in FIG. 1; or the ε2 plane is perpendicular to the roll axis direction.

With reference to FIG. 4, in some embodiments, the inwardly canted angle θ (vertical tail dihedral angle) of the second tail fin 22 ranges from (15°, 45°]. For example, the inwardly canted angle of the second tail fin 22 may be 16°, 20°, 30°, 40°, 45°, or any other suitable value between 15° and 45°. It is understood that the inwardly canted angle θ of the second tail fin 22 refers to the angle between the second tail fin 22 and the ε3 plane. Exemplarily, the ε3 plane is the XZ plane in FIG. 1, or the ε3 plane is perpendicular to the pitch axis direction. Exemplarily, the range of the inwardly canted angle of the first tail fin 21 is [15°, 45°], and the range of the inwardly canted angle of the second tail fin 22 is (15°, 45°], so that the end of the first tail fin 21 away from the first rotor mechanism 11 and the end of the second tail fin 22 away from the first rotor mechanism 11 can connect to each other or be close to each other.

Exemplarily, the front edge sweep angle of the second tail fin 22 ranges from (-60°, 50°], for example, the front edge sweep angle of the second tail fin 22 may be -55°, -30°, 0°, 10°, 30°, 45°, 50°, or any other suitable value between -60° and 50°, so as to reduce the airflow blocked by the second tail fin 22 during the operation of the first rotor mechanism 11, reduce the airflow disturbance of the first rotor mechanism 11 caused by the second tail fin 22, and improve the aerodynamic performance of the aircraft 100. In addition, the range of the front edge sweep angle of the second tail fin 22 also ensures that the end of the second tail fin 22 away from the first rotor mechanism 11 can be connected to or positioned close to the end of the first tail fin 21 away from the first rotor mechanism 11. With reference to FIG. 5, exemplarily, the second tail fin 22 includes a front edge 223 and a rear edge 224, and the front edge sweep angle of the second tail fin 22 is the angle between the front edge 223 of the second tail fin 22 and the ε2 plane. Exemplarily, the ε2 plane is the YZ plane in FIG. 1, and the ε2 plane is perpendicular to the roll axis direction.

With reference to FIG. 4, in some embodiments, the angle β between the first tail fin 21 and the second tail fin 22 ranges from (40°, 125°], for example, the angle between the first tail fin 21 and the second tail fin 22 may be 45°, 60°, 80°, 90°, 120°, 125°, or any other suitable value between 40° and 125°.

With reference to FIG. 4, in some embodiments, at least one of the first tail fin 21 and the second tail fin 22 forms the landing gear of the aircraft 100. For example, the first tail fin 21 and the second tail fin 22 are not connected, and the second tail fin 22 alone forms the landing gear of the aircraft 100; or the middle of the first tail fin 21 is connected to the middle of the second tail fin 22, and the first tail fin 21 and the second tail fin 22 together form the landing gear of the aircraft 100; or the end of the first tail fin 21 away from the first rotor mechanism 11 is connected to the end of the second tail fin 22 away from the first rotor mechanism 11, and the first tail fin 21 and the second tail fin 22 together form the landing gear of the aircraft 100. In this way, the tail fin mechanism 20 can not only provide stability during the flight of the aircraft 100, but also be used to form the landing gear, so that at least part of the tail fin mechanism 20 can function as landing gear when the aircraft 100 lands. At least one of the first tail fin 21 and the second tail fin 22 is integrated with at least two functions, which is advantageous for reducing the number of components, reducing the weight of the aircraft 100, decreasing the flight resistance of the aircraft 100, and lowering costs. The structure of the aircraft 100 is simple and ingeniously designed. In other embodiments, the aircraft 100 may also separately include a rear landing gear, and the first tail fin 21 or the second tail fin 22 may not be used to form the landing gear of the aircraft 100.

With reference to FIG. 4, in some embodiments, the first tail fin 21 is connected to the second tail fin 22. In this way, the structural stiffness and structural performance of both the first tail fin 21 and the second tail fin 22 can be increased, improving the strength and structural performance of the landing gear formed by at least one of the first tail fin 21 and the second tail fin 22. As the aircraft 100 lands on the takeoff and landing platform, the first tail fin 21 and the second tail fin 22 can bear a larger landing load.

Exemplarily, any suitable position of the first tail fin 21 is connected to any suitable position of the second tail fin 22. For example, the middle of the first tail fin 21 is connected to the middle of the second tail fin 22; alternatively, the end of the first tail fin 21 away from the first rotor mechanism 11 is connected to the end of the second tail fin 22 away from the first rotor mechanism 11. In other embodiments, the first tail fin 21 and the second tail fin 22 form the landing gear of the aircraft 100. The first tail fin 21 and the second tail fin 22 may also be arranged with a gap and not connected. In this case, when the aircraft 100 lands, the end of the first tail fin 21 away from the first rotor mechanism 11 and the end of the second tail fin 22 away from the first rotor mechanism 11 constitute two of the landing points of the aircraft 100.

With reference to FIGS. 1 and 4, in some embodiments, the aircraft 100 further includes a body 30. One end of the first tail fin 21 is connected to the body 30, and the other end is connected to the second tail fin 22. The connection between the first tail fin 21 and the second tail fin 22 forms a contact end 23 of the landing gear for contacting the takeoff and landing platform. Exemplarily, the second tail fin 22 extends downward from the bearing member 60 of the aircraft 100, connects with the first tail fin 21, and forms the contact end 23, so that the first tail fin 21 and the second tail fin 22 can function as the rear landing gear. Corresponding to this contact end 23, only a front landing gear 40 needs to be arranged on the body 30 in front of the center of gravity of the aircraft 100, without the need to additionally provide landing gear formed by the first tail fin 21 and the second tail fin 22. This arrangement reduces the number of components, thereby lowering the weight and overall drag of the aircraft 100 and simplifying the structure of the aircraft 100.

The tail fin mechanism 20, the number of first tail fins 21, and/or the number of second tail fins 22 can be designed according to actual needs, for example, as one, two, or more. With reference to FIG. 4, exemplarily, the number of first tail fins 21 includes two, and the number of second tail fins 22 includes two. One first tail fin 21 is connected to one second tail fin 22, forming a first contact end 231 at the connection, and the other first tail fin 21 is connected to the other second tail fin 22, forming a second contact end 232 at the connection. This tail fin mechanism 20 can function as two rear landing gears. As the aircraft 100 lands, the first contact end 231 and the second contact end 232 can serve as two landing points. At this time, only a front landing gear 40 needs to be arranged in front of the center of gravity of the aircraft 100, without separately providing rear landing gear, to reliably support the aircraft 100 during landing. This arrangement reduces the number of components, lowers the weight and overall drag of the aircraft 100, and simplifies the structure of the aircraft 100.

In some embodiments, the first tail fin 21 is connected to the second tail fin 22 to form at least one of the following structures: a V-shaped structure, an X-shaped structure, an inverted V-shaped structure, another regular-shaped structure, or an irregular-shaped structure. Exemplarily, the first tail fin 21 is connected to the second tail fin 22 to form a V-shaped structure. In this way, the landing gear formed by the first tail fin 21 and the second tail fin 22 can be more stable and reliable when the aircraft 100 lands. In addition, forming a V-shaped structure with the first tail fin 21 and the second tail fin 22 improves the controllability of the tail fin mechanism 20 and can also reduce aerodynamic drag.

In some embodiments, the number of first tail fins 21 and the number of second tail fins 22 both include two. The two first tail fins 21 and the two second tail fins 22 are used together to form at least one of the following structures: a serrated structure or a W-shaped structure. Such a structure can effectively improve the structural stiffness and structural performance of the first tail fins 21 and the second tail fins 22. As the aircraft 100 lands on the takeoff and landing platform, the tail fin mechanism 20 can bear a larger landing load. In some embodiments, the number of tail fin mechanisms 20 includes two, with the first tail fin 21 of the two tail fin mechanisms 20 arranged between the second tail fins 22 of the two tail fin mechanisms 20. Exemplarily, the first tail fins 21 of the two tail fin mechanisms 20 can be directly connected; or the first tail fins 21 of the two tail fin mechanisms 20 can each be connected to the body 30.

With reference to FIG. 1, in some embodiments, the aircraft 100 further includes a front landing gear 40. The front landing gear 40 is connected to the body 30 of the aircraft 100 and is configured to support or cushion the aircraft 100 during landing. The number of front landing gears 40 may include one, two, or more.

With reference to FIG. 1, in some embodiments, the aircraft 100 further includes a body 30 and a main wing 50. The main wing 50 is connected to the body 30 and extends laterally from the body 30. The main wing 50 is configured to provide lift; for example, the main wing 50 can provide lift for the aircraft 100 when the aircraft 100 is in the cruising phase. Exemplarily, the first rotor mechanism 11 is located closer to the rear of the body 30 than the main wing 50.

The number of main wings 50 can be designed according to actual needs, for example, as one, two, or more. Exemplarily, the number of main wings 50 includes two, with the two main wings 50 respectively arranged on opposite sides of the body 30.

With reference to FIGS. 1 and 6, in some embodiments, the aircraft 100 further includes a bearing member 60. The bearing member 60 is connected to the main wing 50 and is configured to carry at least part of the rotor mechanism 10. One of the first tail fin 21 and the second tail fin 22 is connected to the body 30, and the other of the first tail fin 21 and the second tail fin 22 is connected to the bearing member 60. Exemplarily, the bearing member 60 is configured to at least carry the first rotor mechanism 11.

Exemplarily, the first tail fin 21 is connected to the body 30, and the second tail fin 22 is connected to the bearing member 60. Exemplarily, the first tail fin 21 is connected to the bearing member 60, and the second tail fin 22 is connected to the body 30. In other embodiments, the bearing member 60 may not be connected to the first tail fin 21 or the second tail fin 22; for example, both the first tail fin 21 and the second tail fin 22 are connected to the body 30. Exemplarily, the connection manner between the first tail fin 21 and the body 30 includes at least one of the following: integral molding connection, snap-fit connection, adhesive connection, magnetic connection, or screw locking connection. The connection manner between the second tail fin 22 and the bearing member 60 includes at least one of the following: integral molding connection, snap-fit connection, adhesive connection, magnetic connection, or screw locking connection. When the first tail fin 21 is connected to the second tail fin 22, their connection manner can include at least one of the following: integral molding connection, snap-fit connection, adhesive connection, magnetic connection, or screw locking connection.

With reference to FIG. 6, in some embodiments, the end of the bearing member 60 is connected to the tail fin mechanism 20, and the first rotor mechanism 11 and the tail fin mechanism 20 are respectively arranged on two sides of the bearing member 60 along the yaw axis direction of the aircraft 100. Arranging the first rotor mechanism 11 and the tail fin mechanism 20 on two sides of the bearing member 60 along the yaw axis direction can minimize contact or physical interference between the first rotor mechanism 11 during operation and the tail fin mechanism 20. This arrangement eliminates the need to consider the radius of the rotation circle of the first rotor mechanism 11 when designing the aircraft 100, reducing the relative positioning requirements between the first rotor mechanism 11 and the tail fin mechanism 20, and making the design positions of the first rotor mechanism 11 and the tail fin mechanism 20 more flexible. In addition, it makes it possible to position the tail fin mechanism 20 closer to the nose of the aircraft 100 along the front-rear direction. This helps reduce the length of the aircraft 100, making its structure more compact and facilitating a miniaturized design. Reducing the size of the aircraft 100 can also, to some extent, reduce the weight of the aircraft 100 and decrease its overall inertia. Exemplarily, the tail fin mechanism 20 and the first rotor mechanism 11 are located on the upper and lower sides of the bearing member 60, respectively.

In some embodiments, the first rotor mechanism 11 is arranged close to the tail fin mechanism 20. When the first rotor mechanism 11 is at least used to provide lift, the tail fin mechanism 20 and the first rotor mechanism 11 are respectively positioned on the upper and lower sides of the bearing member 60, and at least one of the first tail fin 21 and the second tail fin 22 at least partially overlaps with the projection of the rotor disk of the first rotor mechanism 11 along the height direction. Arranging the first rotor mechanism 11 close to the tail fin mechanism 20 in this manner can minimize physical interference between the first rotor mechanism 11 and the tail fin mechanism 20, lowering the relative positioning requirements between them and making it possible to position the tail fin mechanism 20 closer to the nose along the front-rear direction. Because at least one of the first tail fin 21 and the second tail fin 22 at least partially overlaps with the projection of the rotor disk of the first rotor mechanism 11 along the height direction, the size of the aircraft 100 can be reduced, for example, reducing the length of the aircraft 100 along the front-rear direction. This makes the structure of the aircraft 100 more compact and facilitates a miniaturized design. Reducing the size of the aircraft 100 can also, to some extent, reduce its weight and decrease the overall inertia. Therefore, the aircraft 100 in some embodiments of the present application has a reasonably designed structure, a simple configuration, and a relatively small size.

With reference to FIG. 4, in some embodiments, the ends of the first tail fin 21 and the second tail fin 22 are connected, with the end of the first tail fin 21 away from the second tail fin 22 connected to the body 30, and the end of the second tail fin 22 away from the first tail fin 21 connected to the bearing member 60. Connecting the ends of the first tail fin 21 and the second tail fin 22 can improve the structural stiffness and structural performance of the first tail fin 21 and the second tail fin 22, helping to extend their service life and ensuring the normal operation of the aircraft 100.

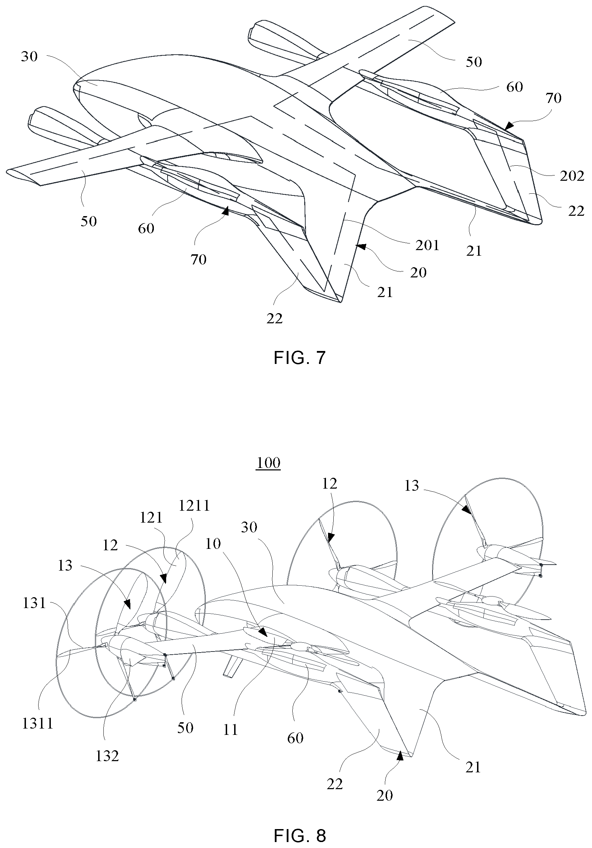

With reference to FIG. 7, in some embodiments, the tail fin mechanism 20, the body 30, the main wing 50, and the bearing member 60 cooperate to form a closed structure 70, optimizing the force transmission path and thereby reducing the weight of the aircraft 100 while increasing structural stiffness and strength. This enables the aircraft 100 to have good modal characteristics and makes its structural design reasonable and simple. In other embodiments, the tail fin mechanism 20, the body 30, the main wing 50, and the bearing member 60 may not cooperate to form the closed structure 70. It should be noted that the above embodiments can significantly enhance the structural strength of the first rotor mechanism 11. The first rotor mechanism 11 is located at the rearmost part of the aircraft 100 and experiences greater fluctuations than other parts; therefore, it is particularly necessary to configure the closed structure 70 to enhance the structural stiffness of the first rotor mechanism 11 at the rear of the aircraft 100.

In some embodiments, the body 30, the main wing 50, the bearing member 60, the first tail fin 21, and the second tail fin 22 cooperate to form a closed structure 70. It is understood that if the bearing member 60 is not connected to the body 30 through the tail fin mechanism 20, any pitching moment generated on the bearing member 60 must be transmitted to the body 30 through the torsional deformation of the main wing 50. In addition, the bearing member 60 carries the first rotor mechanism 11 and has a relatively large rotational inertia. Since the bearing member 60 is connected to the main wing 50, this effectively increases the torsional inertia of the main wing 50 and reduces the equivalent torsional stiffness of the main wing 50. In this embodiment, because the body 30, the main wing 50, the bearing member 60, the first tail fin 21, and the second tail fin 22 cooperate to form the closed structure 70, the force transmission path is optimized. The pitching moment of the bearing member 60 can be transmitted to the main wing 50 or transmitted from the second tail fin 22 to the first tail fin 21, significantly reducing the stress level on the main wing 50. In addition, the main wing 50, the bearing member 60, the tail fin mechanism 20, and the body 30 can form an integrated structure, which improves the torsional stiffness of the main wing 50 to some extent, lowers structural performance requirements of the main wing 50, and helps reduce the weight of the main wing 50. Therefore, in this embodiment, the aircraft 100 can optimize the force transmission path, reduce the weight of the aircraft 100, increase structural stiffness and strength, achieve good modal characteristics, and have a reasonably designed, simple structure. Exemplarily, the closed structure 70 is in a hollow configuration or in a box-frame-like configuration.

With reference to FIGS. 1 and 7, in some embodiments, the number of bearing members 60 includes at least two, for example, two, three, four, or more. Each bearing member 60 is correspondingly provided with a first rotor mechanism 11, and the at least two bearing members 60 are distributed on opposite sides of the body 30. Such an arrangement is advantageous for balancing the center of gravity of the aircraft 100; the aircraft 100 includes at least two first rotor mechanisms 11, enabling the rotor mechanism 10 to provide greater lift for the aircraft 100. Exemplarily, the number of bearing members 60 includes two, and the two bearing members 60 are symmetrically distributed on two sides of the body 30.

With reference to FIG. 7, in some embodiments, the number of tail fin mechanisms 20 includes at least two, and the at least two tail fin mechanisms 20 are distributed on two sides of the body 30. In this way, the tail fin mechanisms 20 can provide better stability during the flight of the aircraft 100, making the flight of the aircraft 100 more stable. Distributing at least two tail fin mechanisms 20 on two sides of the body 30 is also advantageous for balancing the center of gravity of the aircraft 100. Exemplarily, the number of tail fin mechanisms 20 includes two, and the two tail fin mechanisms 20 are symmetrically distributed on two sides of the body 30.

With reference to FIG. 7, in some embodiments, at least two tail fin mechanisms 20 each form a closed structure 70 together with the body 30, the main wing 50, and the bearing member 60. The number of closed structures 70 corresponds to the number of tail fin mechanisms 20, and each tail fin mechanism 20 can form one closed structure 70 together with the body 30, the main wing 50, and the corresponding bearing member 60. Exemplarily, the number of tail fin mechanisms 20 or the number of closed structures 70 is determined according to the number of bearing members 60 or the number of first rotor mechanisms 11. For example, each bearing member 60 is correspondingly provided with one closed structure 70. Exemplarily, the number of bearing members 60 includes two, the number of tail fin mechanisms 20 includes two, and the number of main wings 50 includes two. The body 30, one of the main wings 50, one of the bearing members 60, and one of the tail fin mechanisms 20 form one closed structure 70; and the body 30, the other main wing 50, the other bearing member 60, and the other tail fin mechanism 20 form another closed structure 70. In this way, the force transmission path can be optimized as much as possible, and the two closed structures 70 can respectively reduce the stress level of the two main wings 50 and respectively improve the torsional stiffness of the two main wings 50, thereby reducing the weight of the aircraft 100, increasing structural stiffness and strength, and further enabling the aircraft 100 to have good modal characteristics.

Exemplarily, the dashed line 201 in FIG. 7 represents one force transmission path of one of the closed structures 70. The dashed line 202 in FIG. 7 represents one force transmission path of another closed structure 70. These are merely exemplary and do not limit the present application.

In some embodiments, the first tail fin 21 is configured to provide a downward force for the aircraft 100 in the pitch direction, and the center of gravity of the aircraft 100 is located in front of the aircraft 100. With such an arrangement, the first tail fin 21 can provide a certain balancing effect on the center of gravity of the aircraft 100, preventing the nose of the aircraft 100 from pitching downward during takeoff and cruising flight, which could otherwise cause the aircraft 100 to fall or even crash, thereby improving the flight safety of the aircraft 100.

Exemplarily, the first tail fin 21 is located below the plane where the main wing 50 is located, so as to reduce or avoid the influence of the airflow generated by the main wing 50 on the first tail fin 21, thereby improving the flight safety of the aircraft 100 during vertical takeoff and landing.

With reference to FIG. 1, in some embodiments, the rotor mechanism 10 further includes a second rotor mechanism 12. The first rotor mechanism 11 is located closer to the rear of the body 30 than the second rotor mechanism 12. A line connecting the center of the first rotor mechanism 11 and the center of the second rotor mechanism 12 is parallel or substantially parallel to the roll axis of the aircraft 100. The second rotor mechanism 12 can provide lift for the aircraft 100 and/or can provide thrust for the aircraft 100, enabling the aircraft 100 to adapt to complex environments and improving the performance of the aircraft 100.

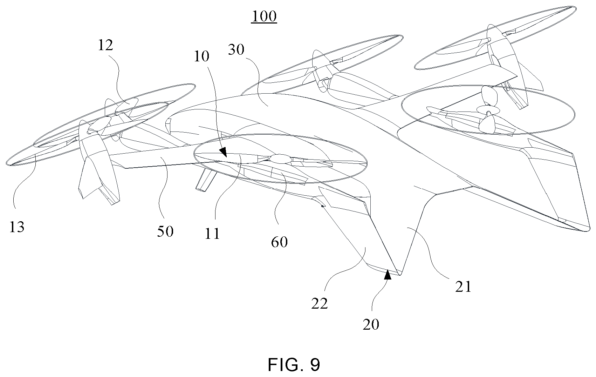

With reference to FIGS. 1 and 8, in some embodiments, the second rotor mechanism 12 can provide lift for the aircraft 100 in a first state, such that the second rotor mechanism 12 cooperates with the first rotor mechanism 11 to provide lift for the aircraft 100 during vertical ascent of the aircraft 100. The second rotor mechanism 12 can provide thrust for the aircraft 100 in a second state; for example, it can push or pull the aircraft 100 forward during cruising flight, enabling the aircraft 100 to have a longer range and faster flight speed, thereby allowing the aircraft 100 to adapt to complex environments and improving the performance of the aircraft 100. The first state includes a vertical takeoff and landing state, and the second state includes a cruising state. Exemplarily, as the second rotor mechanism 12 is in the first state, the rotor disk of the blades of the second rotor mechanism 12 faces upward to provide lift for the aircraft 100. When the second rotor mechanism 12 is in the second state, the blades of the second rotor mechanism 12 tilt, such that the rotor disk of the blades faces toward the nose direction to provide thrust for the aircraft 100. Exemplarily, the second rotor mechanism 12 in the first state is suitable for vertical takeoff and landing of the aircraft 100, and the second rotor mechanism 12 in the second state is suitable for cruising flight of the aircraft 100. Exemplarily, the second rotor mechanism 12 in the first state is as shown in FIG. 1, and in the second state is as shown in FIG. 8. In other embodiments, the second rotor mechanism 12 in the first state is as shown in FIG. 9; or the second rotor mechanism 12 in the second state is as shown in FIG. 9. In some embodiments, the second rotor mechanism 12 may also be a non-tiltable rotor mechanism. For example, the second rotor mechanism 12 is configured to provide thrust for the aircraft 100 during cruising flight; or the second rotor mechanism 12 is configured to provide lift for the aircraft 100 during vertical takeoff and landing.

The number of second rotor mechanisms 12 can be designed according to actual requirements, for example, one, two, or more. In some embodiments, the number of second rotor mechanisms 12 includes at least two, and the plurality of second rotor mechanisms 12 are arranged at different positions of the aircraft 100. This can increase the total thrust of the second rotor mechanisms 12, enabling the aircraft 100 to have a faster flight speed and a longer range, and enabling the aircraft 100 to maintain relatively high forward efficiency during vertical takeoff and landing; and/or can increase the total lift of the second rotor mechanisms 12, enabling the aircraft 100 to perform rapid vertical takeoff and landing or hovering during vertical takeoff and landing. Exemplarily, the number of second rotor mechanisms 12 includes two, and the two second rotor mechanisms 12 are respectively arranged on opposite sides of the body 30.

With reference to FIG. 8, in some embodiments, the second rotor mechanism 12 includes a second rotor 121 and a second driving mechanism (not shown). The second driving mechanism is configured to drive the second rotor 121 to switch between the first state and the second state. The second rotor 121 is connected to the bearing member 60, and the bearing member 60 extends from the main wing 50 along the roll axis direction of the aircraft 100. In some embodiments, the second rotor 121 further includes a first power member (not shown) and a second propeller 1211. The first power member is connected to the second propeller 1211 and is configured to drive the second propeller 1211 to rotate. Exemplarily, the first power member may include any suitable type of motor, such as a brushed motor or a brushless motor. Exemplarily, the second propeller 1211 can rotate about a second rotation axis. When the second rotor 121 is in the first state, the second rotation axis of the second propeller 1211 can be aligned with the ascending or descending direction of the aircraft 100, such that when the first power member operates, it drives the second propeller 1211 to rotate, thereby providing lift for the aircraft 100. When the second rotor 121 is in the second state, the second rotation axis of the second propeller 1211 can be aligned with the forward direction of the aircraft 100, such that when the first power member operates, it drives the second propeller 1211 to rotate, thereby providing thrust for the aircraft 100 to push or pull the aircraft 100 forward.

With reference to FIGS. 1 and 8, in some embodiments, the rotor mechanism 10 further includes a third rotor mechanism 13. The third rotor mechanism 13 is arranged on the main wing 50, and the third rotor mechanism 13 can provide lift for the aircraft 100 in the first state and provide thrust for the aircraft 100 in the second state, enabling the aircraft 100 to adapt to complex environments and improving the performance of the aircraft 100. The first state includes a vertical takeoff and landing state, and the second state includes a cruising state. Exemplarily, the third rotor mechanism 13 in the first state is suitable for vertical takeoff and landing of the aircraft 100, and the third rotor mechanism 13 in the second state is suitable for cruising flight of the aircraft 100. Exemplarily, the third rotor mechanism 13 in the first state is as shown in FIG. 1, and in the second state is as shown in FIG. 8. In other embodiments, the third rotor mechanism 13 in the first state is as shown in FIG. 9; or the third rotor mechanism 13 in the second state is as shown in FIG. 9. In other embodiments, the third rotor mechanism 13 may also be a non-tiltable rotor mechanism. For example, the third rotor mechanism 13 is configured to provide thrust for the aircraft 100 during cruising flight. Exemplarily, when the third rotor mechanism 13 is in the first state, the rotor disk of the blades of the third rotor mechanism 13 faces upward to provide lift for the aircraft 100; and when the third rotor mechanism 13 is in the second state, the blades of the third rotor mechanism 13 tilt, such that the rotor disk of the blades faces toward the nose direction to provide thrust for the aircraft 100.

The number of third rotor mechanisms 13 can be designed according to actual requirements, for example, one, two, three, or more. In some embodiments, the number of third rotor mechanisms 13 includes at least two, and the plurality of third rotor mechanisms 13 are arranged at different positions of the aircraft 100. In this way, on the one hand, the total thrust of the third rotor mechanisms 13 can be increased, enabling the aircraft 100 to have a faster flight speed and a longer range, and enabling the aircraft 100 to maintain relatively high forward efficiency during vertical takeoff and landing; and/or, the total lift of the third rotor mechanisms 13 can be increased, enabling the aircraft 100 to perform rapid vertical takeoff and landing or hovering during vertical takeoff and landing. Exemplarily, the number of third rotor mechanisms 13 includes two, and the two third rotor mechanisms 13 are respectively arranged on opposite sides of the body 30.

With reference to FIG. 8, in some embodiments, the third rotor mechanism 13 includes a third rotor 131 and a third driving mechanism (not shown). The third driving mechanism is configured to drive the third rotor 131 to switch between the first state and the second state, and the third rotor 131 is connected to the end of the main wing 50. The third rotor mechanism 13 can provide thrust for the aircraft 100 in the second state; for example, it can push or pull the aircraft 100 forward during cruising flight, enabling the aircraft 100 to have a longer range and a faster flight speed. The third rotor mechanism 13 can provide lift for the aircraft 100 in the first state, and can cooperate with the first rotor mechanism 11 to provide lift for the aircraft 100 during vertical ascent of the aircraft 100, enabling the aircraft 100 to adapt to complex environments and improving the performance of the aircraft 100.

In some embodiments, the third rotor 131 further includes a second power member and a third propeller 1311. The second power member is connected to the third propeller 1311 and is configured to drive the third propeller 1311 to rotate. Exemplarily, the second power member may include any suitable type of motor, such as a brushed motor or a brushless motor. Exemplarily, the third propeller 1311 can rotate about a third rotation axis. In the first state, the third rotation axis of the third propeller 1311 can be aligned with the ascending or descending direction of the aircraft 100, such that when the second power member operates, it drives the third propeller 1311 to rotate, thereby providing lift for the aircraft 100 to drive the aircraft 100 to ascend or descend. When the third rotor 131 is in the second state, the third rotation axis of the third propeller 1311 can be aligned with the forward direction of the aircraft 100, such that when the second power member operates, it drives the third propeller 1311 to rotate, thereby providing thrust for the aircraft 100 to push or pull the aircraft 100 forward.

It can be understood that at least one of the second rotor mechanism 12 and the third rotor mechanism 13 may also be omitted.

Exemplarily, the first rotor mechanism 11 is located at the rearmost portion of the body 30 relative to the other rotor mechanisms of the rotor mechanism 10. For example, the first rotor mechanism 11 is located at the rearmost portion of the body 30 relative to the second rotor mechanism 12 and the third rotor mechanism 13.

Exemplarily, during cruising flight of the aircraft 100, at least one of the second rotor mechanism 12 and the third rotor mechanism 13 can be controlled to operate according to actual requirements, such that at least one of the second rotor mechanism 12 and the third rotor mechanism 13 provides thrust for the aircraft 100. For example, when the aircraft 100 is cruising or moving forward, the third rotor 131 of the third rotor mechanism 13 may not operate, and the second rotor 121 of the second rotor mechanism 12 operates in the second state, in which case only the second rotor 121 provides thrust for the aircraft 100; or the second rotor 121 of the second rotor mechanism 12 does not operate, and the third rotor 131 of the third rotor mechanism 13 operates in the second state, in which case only the third rotor 131 provides thrust for the aircraft 100; or the second rotor 121 of the second rotor mechanism 12 and the third rotor 131 of the third rotor mechanism 13 both operate in the second state, in which case the second rotor 121 and the third rotor 131 jointly provide thrust for the aircraft 100. During cruising flight of the aircraft 100, the first driving mechanism of the first rotor mechanism 11 can be stopped to halt rotation of the first rotor 111, thereby saving power.

Exemplarily, when the rotor mechanism 10 includes the first rotor mechanism 11, the second rotor mechanism 12, and the third rotor mechanism 13, at least one of the first rotor mechanism 11, the second rotor mechanism 12, and the third rotor mechanism 13 can be controlled to operate according to actual requirements, such that at least one of the first rotor mechanism 11, the second rotor mechanism 12, and the third rotor mechanism 13 provides lift for the aircraft 100. For example, during vertical takeoff and landing of the aircraft 100, the first driving mechanism drives the first rotor 111 to rotate, while the second rotor 121 and the third rotor 131 stop operating, in which case only the first rotor mechanism 11 provides lift for the aircraft 100. In another example, during vertical takeoff and landing of the aircraft 100, the first power member of the second rotor 121 in the first state drives the second propeller 1211 to rotate, while the first rotor mechanism 11 and the third rotor 131 stop operating, in which case only the second rotor 121 provides lift for the aircraft 100. As another example, during vertical takeoff and landing of the aircraft 100, the second power member of the third rotor 131 in the first state drives the third propeller 1311 to rotate, while the first rotor mechanism 11 and the second rotor 121 stop operating, in which case only the third rotor 131 provides lift for the aircraft 100. Additionally, during vertical takeoff and landing of the aircraft 100, at least two of the first rotor mechanism 11, the second rotor 121, and the third rotor 131 may operate, such that at least two of the first rotor mechanism 11, the second rotor 121, and the third rotor 131 provide lift for the aircraft 100. It can be understood that, during vertical takeoff and landing of the aircraft 100, when only one of the second rotor 121 in the second state and the third rotor 131 in the second state operates to provide lift for the aircraft 100, the first rotor 111 can stop rotating.

It can be understood that when the lift generated by the rotor mechanism 10 during operation is greater than the weight of the aircraft 100, the aircraft 100 ascends; when the lift generated by the rotor mechanism 10 is less than the weight of the aircraft 100, the aircraft 100 descends; and when the lift generated by the rotor mechanism 10 equals the weight of the aircraft 100, the aircraft 100 hovers.

With reference to FIG. 8, in some embodiments, the third rotor mechanism 13 further includes a tip 132. The tip 132 is disposed on the third rotor 131 and is configured to cooperate with the main wing 50 in the second state to increase the wingspan of the aircraft 100. Exemplarily, each main wing 50 corresponds to one tip 132. The tip 132 can reduce vortices on both sides of the body 30, thereby reducing drag during flight of the aircraft 100 and improving the flight stability of the aircraft 100.

With reference to FIG. 1, some embodiments of the present application further provide an aircraft 100, including a rotor mechanism 10 and a tail fin mechanism 20. The rotor mechanism 10 is configured to at least provide lift for the aircraft 100 and includes a first rotor mechanism 11 and a bearing member 60 configured to support the first rotor mechanism 11. The tail fin mechanism 20 includes a first tail fin 21 and a second tail fin 22. The first tail fin 21 is configured to provide stability in at least a first direction when the aircraft 100 is flying, and the second tail fin 22 is configured to provide stability in at least a second direction when the aircraft 100 is flying, the first direction being different from the second direction. The first rotor mechanism 11 is arranged close to the tail fin mechanism 20, and when the first rotor mechanism 11 is at least used to provide lift, the tail fin mechanism 20 and the first rotor mechanism 11 are disposed on the upper and lower sides of the bearing member 60, respectively, and at least one of the first tail fin 21 and the second tail fin 22 at least partially overlaps with the projection of the rotor disk of the first rotor mechanism 11 in the height direction.

In the aircraft 100 of the above embodiment, since the first rotor mechanism 11 is arranged close to the tail fin mechanism 20, and when the first rotor mechanism 11 is at least used to provide lift, the tail fin mechanism 20 and the first rotor mechanism 11 are disposed on the upper and lower sides of the bearing member 60, respectively, and at least one of the first tail fin 21 and the second tail fin 22 at least partially overlaps with the projection of the rotor disk of the first rotor mechanism 11 in the height direction, the physical interference between the first rotor mechanism 11 and the tail fin mechanism 20 can be minimized. This reduces the relative position requirements between the first rotor mechanism 11 and the tail fin mechanism 20 and enables the tail fin mechanism 20 to be arranged in the fore-aft direction toward the front of the aircraft.

Since at least one of the first tail fin 21 and the second tail fin 22 at least partially overlaps with the projection of the rotor disk of the first rotor mechanism 11 in the height direction, the overall size of the aircraft 100 can be reduced, for example, the length of the aircraft 100 in the fore-aft direction can be shortened. This makes the structure of the aircraft 100 more compact, facilitating a small-sized design. The reduction in the size of the aircraft 100 can also partially reduce the weight of the aircraft 100 and decrease the overall inertia. Therefore, the aircraft 100 of this embodiment of the present application has a reasonably designed structure, is simple in structure, and has a small size.

Exemplarily, the rotor mechanism 10 includes any one of the above embodiments of the rotor mechanism 10. The tail fin mechanism 20 includes any one of the above embodiments of the tail fin mechanism 20. The bearing member 60 includes any one of the above embodiments of the bearing member 60. The aircraft 100 includes any one of the above embodiments of the aircraft 100.

Exemplarily, the first rotor mechanism 11 includes a first rotor 111 that can rotate about a preset rotation axis, and the rotor disk of the first rotor mechanism 11 is perpendicular to the rotation axis of the first rotor 111. Exemplarily, the plane in which the rotor disk of the first rotor mechanism 11 is located corresponds to the plane of the rotation circle of the first rotor mechanism 11.

Exemplarily, at least one of the first tail fin 21 and the second tail fin 22 at least partially overlaps with the projection of the rotor disk of the first rotor mechanism 11 in the height direction, including: the first tail fin 21 or the second tail fin 22 at least partially overlapping with the projection of the rotor disk of the first rotor mechanism 11 in the height direction. The first tail fin 21 at least partially overlaps with the projection of the rotor disk of the first rotor mechanism 11 in the height direction, and the second tail fin 22 at least partially overlaps with the projection of the rotor disk of the first rotor mechanism 11 in the height direction.

Exemplarily, one of the first tail fin 21 and the second tail fin 22 has its orthographic projection in the plane of the rotation circle of the first rotor mechanism 11 located outside the rotation circle, and the other of the first tail fin 21 and the second tail fin 22 has its orthographic projection at least partially within the rotation circle in the plane of the rotation circle of the first rotor mechanism 11. Exemplarily, the orthographic projections of the first tail fin 21 and the second tail fin 22 in the plane of the rotation circle of the first rotor mechanism 11 are located within the rotation circle; or the orthographic projections of the first tail fin 21 and the second tail fin 22 in the plane of the rotation circle of the first rotor mechanism 11 are located outside the rotation circle.

With reference to FIG. 1, some embodiments of the present application also provide an aircraft 100, including a body 30, a rotor mechanism 10, a tail fin mechanism 20, and a main wing 50. The rotor mechanism 10 is configured to at least provide lift for the aircraft 100, and the rotor mechanism 10 includes a first rotor mechanism 11 and a bearing member 60 for supporting the first rotor mechanism 11, the first rotor mechanism 11 is located at the rearmost portion of the body 30 relative to other rotor mechanisms. The tail fin mechanism 20 includes a first tail fin 21 and a second tail fin 22, where the first tail fin 21 is configured to provide stability in at least a first direction when the aircraft 100 is flying, and the second tail fin 22 is configured to provide stability in at least a second direction when the aircraft 100 is flying, the first direction being different from the second direction. The main wing 50 is connected to the body 30 and is configured to provide lift. Exemplarily, the tail fin mechanism 20, the body 30, the main wing 50, and the bearing member 60 together form a closed structure 70.

The aircraft 100 in the above embodiments, since the tail fin mechanism 20 forms a closed structure 70 with the body 30, the main wing 50, and the bearing member 60, exemplarily optimizes the force transmission path. The pitch moment of the bearing member 60 can be transmitted to the main wing 50, and can also be transmitted to the first tail fin 21 through the second tail fin 22, which can significantly reduce the stress level of the main wing 50. In addition, the main wing 50, the bearing member 60, the tail fin mechanism 20, and the body 30 can form an integral unit, which can to some extent enhance the torsional stiffness of the main wing 50, helping to reduce the structural performance requirements and weight of the main wing 50. Forming an integral unit of the main wing 50, the bearing member 60, the tail fin mechanism 20, and the body 30 can also improve the structural stiffness and mechanical strength of the bearing member 60, the tail fin mechanism 20, and the body 30, and the structural stiffness and mechanical strength of the first rotor component 11 mounted on the bearing member 60 can also be correspondingly increased. It should be particularly noted that the above embodiments can significantly enhance the structural strength of the first rotor component 11. Since the first rotor component 11 is located at the rear end of the aircraft 100, it experiences greater fluctuations than other parts, and therefore needs to be specially configured as a closed structure 70 to enhance the structural stiffness of the first rotor component 11. Therefore, in the present embodiment, the aircraft 100 can optimize the force transmission path, reduce the weight of the aircraft 100, and increase structural stiffness and strength, so that the aircraft 100 has favorable modal characteristics and a reasonably designed, structurally simple configuration.

Exemplarily, the body 30 includes the body 30 of any one of the above embodiments. The rotor mechanism 10 includes the rotor mechanism 10 of any one of the above embodiments. The tail fin mechanism 20 includes the tail fin mechanism 20 of any one of the above embodiments. The main wing 50 includes the main wing 50 of any one of the above embodiments. The aircraft 100 includes the aircraft 100 of any one of the above embodiments.

Some embodiments of the present application also provide an aircraft 100, including a body 30 and a tail fin mechanism 20. The tail fin mechanism 20 is arranged on the body 30 and includes a first tail fin 21 and a second tail fin 22. The first tail fin 21 is configured to play a stabilizing role at least in a first direction when the aircraft 100 is flying, and the second tail fin 22 is configured to play a stabilizing role at least in a second direction when the aircraft 100 is flying, with the first direction being different from the second direction. Here, at least part of at least one of the first tail fin 21 and the second tail fin 22 extends out of the body 30 in the pitch direction of the aircraft 100 to form the landing gear of the aircraft 100.

In the above embodiments, the aircraft 100, since at least one of the first tail fin 21 and the second tail fin 22 is used to form the landing gear of the aircraft 100, the tail fin mechanism 20 can not only play a stabilizing role when the aircraft 100 is flying, but also be used to form the landing gear, so that at least part of the tail fin mechanism 20 can have the function of landing gear when the aircraft 100 lands. At least one of the first tail fin 21 and the second tail fin 22 integrates at least two functions, which is beneficial for reducing the number of components, decreasing the weight of the aircraft 100, reducing the flight resistance of the aircraft 100, and lowering costs. The aircraft 100 has a simple structure and ingenious design.

Exemplarily, the body 30 includes the body 30 of any one of the above embodiments. The tail fin mechanism 20 includes the tail fin mechanism 20 of any one of the above embodiments. The aircraft 100 includes the aircraft 100 of any one of the above embodiments.

In some embodiments, the first tail fin 21 is connected to the second tail fin 22.

In some embodiments, one end of the first tail fin 21 is connected to the body 30, and the other end is connected to the second tail fin 22. A contact end 23 for contacting the takeoff and landing platform is formed at the connection between the first tail fin 21 and the second tail fin 22 in the landing gear.

In some embodiments, the first tail fin 21 is connected to the second tail fin 22 and forms at least one of the following structures: a V-shaped structure, an X-shaped structure, or an inverted V-shaped structure.

In some embodiments, the number of the first tail fins 21 and the number of the second tail fins 22 each include two. The two first tail fins 21 and the two second tail fins 22 are used cooperatively to form at least one of the following structures: a serrated structure or a W-shaped structure.

In some embodiments, the first direction is the pitch direction of the aircraft 100, and the second direction is the yaw direction of the aircraft 100.

In some embodiments, the aircraft 100 further includes a rotor mechanism 10. The rotor mechanism 10 is configured to at least provide lift for the aircraft 100. In response to the first rotor component 11 providing lift, the tail fin mechanism 20 is located below the rotor mechanism 10.

In some embodiments, the aircraft 100 further includes a rotor mechanism 10. The rotor mechanism 10 is configured to at least provide lift for the aircraft 100. The rotor mechanism 10 includes a first rotor component 11, which is arranged close to the tail fin mechanism 20. When the first rotor component 11 is used to provide lift, the orthographic projection of at least one of the first tail fin 21 and the second tail fin 22 on the plane of the rotation circle of the first rotor component 11 is located outside the rotation circle, and the other is at least partially located within the rotation circle in the orthographic projection on the plane of the rotation circle of the first rotor component 11.

In some embodiments, when the first rotor component 11 is used to provide lift, the orthographic projection of the first tail fin 21 on the plane of the rotation circle of the first rotor component 11 is located outside the rotation circle.

In some embodiments, the end of the second tail fin 22 close to the first rotor component 11 intersects the rotation circle in the front-rear direction or the roll axis direction of the aircraft 100 in the orthographic projection on the plane of the rotation circle of the first rotor component 11.

In some embodiments, the anhedral angle of the first tail fin 21 ranges from [15°, 45°].

In some embodiments, the front edge sweep angle of the first tail fin 21 ranges from (-60°, 50°].

In some embodiments, the rear edge sweep angle of the first tail fin 21 ranges from (-60°, 50°].

In some embodiments, the inwardly canted angle of the second tail fin 22 ranges from (15°, 45°].

In some embodiments, the angle between the first tail fin 21 and the second tail fin 22 ranges from (40°, 125°].

In some embodiments, when the first rotor component 11 is used to provide lift, the orthographic projection of the second tail fin 22 on the plane of the rotation circle of the first rotor component 11 is located outside the rotation circle.

In some embodiments, the aircraft 100 further includes: a rotor mechanism 10, which is configured to at least provide lift for the aircraft 100; a main wing 50, connected to the body 30 and laterally extending from the body 30, the main wing 50 being used to provide lift; and a bearing member 60, connected to the main wing 50 and configured to support at least part of the rotor mechanism 10. One of the first tail fin 21 and the second tail fin 22 is connected to the body 30, and the other is connected to the bearing member 60.

Herein, the rotor mechanism 10 includes a first rotor component 11, and the first rotor component 11 includes a first rotor 111 and a first driving mechanism, the first driving mechanism being configured to drive the first rotor 111 to provide lift.

In some embodiments, the end of the bearing member 60 is connected to the tail fin mechanism 20. The first rotor component 11 and the tail fin mechanism 20 are arranged on opposite sides of the bearing member 60 along the yaw axis direction of the aircraft 100.

In some embodiments, the ends of the first tail fin 21 and the second tail fin 22 are connected, with the end of the first tail fin 21 away from the second tail fin 22 connected to the body 30, and the end of the second tail fin 22 away from the first tail fin 21 connected to the bearing member 60.

In some embodiments, the body 30, the main wing 50, the bearing member 60, the first tail fin 21, and the second tail fin 22 cooperate to form a closed structure 70.

In some embodiments, the number of bearing members 60 includes at least two. Each bearing member 60 is correspondingly provided with a first rotor component 11, and at least two bearing members 60 are distributed on both sides of the body 30.

In some embodiments, the number of tail fin mechanisms 20 includes at least two, and at least two tail fin mechanisms 20 are distributed on both sides of the body 30.

In some embodiments, at least two tail fin mechanisms 20 each form a closed structure 70 with the body 30, the main wing 50, and the bearing member 60.

In some embodiments, the first tail fin 21 is used to provide a downward force for the aircraft 100 in the pitch direction, with the center of gravity of the aircraft 100 located in a front portion of the aircraft 100.

In some embodiments, the rotor mechanism 10 further includes a second rotor component 12. The first rotor component 11 is closer to the rear of the body 30 compared to the second rotor component 12. The line connecting the centers of the first rotor component 11 and the second rotor component 12 is parallel or substantially parallel to the roll axis of the aircraft 100.

In some embodiments, the first rotor component 11 is used to provide lift for the aircraft 100; and/or the second rotor component 12 is configured to provide lift for the aircraft 100 in a first state and provide thrust for the aircraft 100 in a second state. Here, the first state includes a vertical takeoff and landing state, and the second state includes a cruising state.

In some embodiments, the second rotor component 12 includes a second rotor 121 and a second driving mechanism. The second driving mechanism is configured to drive the second rotor 121 to switch between the first state and the second state. The second rotor 121 is connected to the bearing member 60, and the bearing member 60 extends from the main wing 50 along the lateral axis direction of the aircraft 100.

In some embodiments, the rotor mechanism 10 further includes a third rotor component 13. The third rotor component 13 is arranged on the main wing 50 and is capable of providing lift for the aircraft 100 in the first state and providing thrust for the aircraft 100 in the second state. Here, the first state includes a vertical takeoff and landing state, and the second state includes a cruise state.

In some embodiments, the third rotor component 13 includes a third rotor 131 and a third driving mechanism. The third driving mechanism is configured to drive the third rotor 131 to switch between the first state and the second state, and the third rotor 131 is connected to the end of the main wing 50.

In some embodiments, the third rotor component 13 further includes: a tip 132, arranged on the third rotor 131, configured to cooperate with the main wing 50 in the second state to increase the wingspan of the aircraft 100.

In the description of the present application, it should be noted that, unless otherwise explicitly specified and limited, the terms "mounted," "connected," "linked," "mechanically coupled," and "engaged" are to be understood in a broad sense. For example, the connection may be a fixed connection, a detachable connection, or an integral connection. It may be a mechanical connection or an electrical connection. It may be a direct connection or an indirect connection through an intermediate medium, and may involve internal communication between two elements or an interaction relationship between two elements. Mechanical coupling or engagement between two components includes both direct coupling and indirect coupling. For example, direct fixed connection, connection through a transmission mechanism, etc. For a person skilled in the art, the specific meaning of the above terms in the present application can be understood according to the specific circumstances.

In the present application, unless otherwise explicitly specified and limited, the "on" or "above" and "under" or "below" of a first feature relative to a second feature may include direct contact between the first and second features, or may include indirect contact via other features therebetween. Moreover, the terms "on," "above," and "over" a second feature include the first feature being directly above or diagonally above the second feature, or simply indicate that the first feature has a greater horizontal height than the second feature. The terms "under," "below," and "beneath" a second feature include the first feature being directly below or diagonally below the second feature, or simply indicate that the first feature has a smaller horizontal height than the second feature.

The above disclosure provides many different embodiments or examples for implementing various structures of the present application. For the purpose of simplifying the disclosure of the present application, the components and arrangements of specific examples are described above. Of course, they are merely exemplary and are not intended to limit the present application. In addition, the present application may repeatedly use reference numerals and/or letters across different examples; such repetition is for the purpose of simplification and clarity and does not, by itself, indicate the relationship between the various embodiments and/or arrangements discussed. Furthermore, the present application provides examples of various specific processes and materials, but a person skilled in the art can recognize the applicability of other processes and/or the use of other materials.

In the description of this specification, the terms "an embodiment," "some embodiments," "exemplary embodiment," "example," "specific example," or "some examples," and similar descriptions mean that the specific method steps, features, structures, materials, or characteristics described in connection with the embodiment or example are included in at least one embodiment or example of the present application. In this specification, the exemplary use of the above terms does not necessarily refer to the same embodiment or example. Moreover, the described specific method steps, features, structures, materials, or characteristics may be appropriately combined in any one or more embodiments or examples.

The above descriptions are only specific embodiments of the present application, and the protection scope of the present application is not limited thereto. Any person skilled in the art, within the technical scope disclosed in the present application, can readily conceive of various equivalent modifications or substitutions, which should all be encompassed within the protection scope of the present application. Therefore, the protection scope of the present application should be defined by the scope of the claims.

## Claims

1. An aircraft, **characterized in that** the aircraft comprises:
a rotor mechanism, the rotor mechanism being configured to at least provide lift for the aircraft, the rotor mechanism comprising a first rotor component; and
a tail fin mechanism, the tail fin mechanism comprising a first tail fin and a second tail fin, the first tail fin being configured to play a stabilizing role at least in a first direction when the aircraft is flying, the second tail fin being configured to play a stabilizing role at least in a second direction when the aircraft is flying, the first direction being different from the second direction, wherein
the first rotor component is arranged close to the tail fin mechanism, and when the first rotor component is at least used to provide lift, an orthographic projection of one of the first tail fin and the second tail fin on a plane of a rotation circle of the first rotor component is outside the rotation circle, and an orthographic projection of the other on the plane of the rotation circle of the first rotor component is at least partially within the rotation circle.

2. The aircraft according to claim 1, **characterized in that** the first direction is a pitch direction of the aircraft, and the second direction is a yaw direction of the aircraft.

3. The aircraft according to claim 1, **characterized in that** in response to the first rotor component providing lift, the tail fin mechanism is located below the first rotor component.

4. The aircraft according to any one of claims 1 to 3, **characterized in that** when the first rotor component is used to provide lift, the orthographic projection of the first tail fin on the plane of the rotation circle of the first rotor component is located outside the rotation circle.

5. The aircraft according to claim 4, **characterized in that** an orthographic projection of an end of the second tail fin close to the first rotor component on the plane of the rotation circle intersects the rotation circle in a front-rear direction or a roll axis direction of the aircraft.

6. The aircraft according to claim 4, **characterized in that** an range of anhedral angle of the first tail fin is from [15°, 45°].

7. The aircraft according to claim 4, **characterized in that** a range of a front edge sweep angle of the first tail fin is (-60°, 50°].

8. The aircraft according to claim 4, **characterized in that** a range of a rear edge sweep angle of the first tail fin is (-60°, 50°].

9. The aircraft according to claim 4, **characterized in that** a range of an inwardly canted angle of the second tail fin is (15°, 45°].

10. The aircraft according to claim 4, **characterized in that** a range of an angle between the first tail fin and the second tail fin is (40°, 125°].

11. The aircraft according to any one of claims 1 to 3, **characterized in that** when the first rotor component is used to provide lift, the orthographic projection of the second tail fin on the plane of the rotation circle of the first rotor component is outside the rotation circle.

12. The aircraft according to claim 1, **characterized in that** at least one of the first tail fin and the second tail fin forms a landing gear of the aircraft.

13. The aircraft according to claim 12, **characterized in that** the first tail fin is connected to the second tail fin.

14. The aircraft according to claim 13, **characterized in that** the aircraft further comprises a body, an end of the first tail fin is connected to the body, the other end thereof is connected to the second tail fin, and a connection between the first tail fin and the second tail fin forms a contact end of the landing gear for contacting a takeoff and landing platform.

15. The aircraft according to claim 14, **characterized in that** the first tail fin is connected to the second tail fin to form at least one of the following structures: a V-shaped structure, an X-shaped structure, an inverted V-shaped structure.

16. The aircraft according to claim 14, **characterized in that** the number of the first tail fins and the number of the second tail fins both comprise two, and the two first tail fins and the two second tail fins are configured to cooperatively form at least one of the following structures: a serrated structure, a W-shaped structure.

17. The aircraft according to claim 1, **characterized in that** the aircraft further comprises:
a body;
a main wing, connected to the body and laterally extending from the body, the main wing being configured to provide lift; and
a bearing member, connected to the main wing and configured to carry at least part of the rotor mechanism, wherein one of the first tail fin and the second tail fin is connected to the body, and the other of the first tail fin and the second tail fin is connected to the bearing member, wherein
the first rotor component comprises a first rotor and a first driving mechanism, and the first driving mechanism is configured to drive the first rotor to provide lift.

18. The aircraft according to claim 17, **characterized in that** an end of the bearing member is connected to the tail fin mechanism, and the first rotor component and the tail fin mechanism are respectively arranged on both sides of the bearing member along a yaw axis direction of the aircraft.

19. The aircraft according to claim 17 or 18, **characterized in that** ends of the first tail fin and the second tail fin are connected, one end of the first tail fin away from the second tail fin is connected to the body, and one end of the second tail fin away from the first tail fin is connected to the bearing member.

20. The aircraft according to claim 17, **characterized in that** the body, the main wing, the bearing member, the first tail fin, and the second tail fin cooperatively form a closed structure.

21. The aircraft according to claim 17 or 18, **characterized in that** the number of the bearing members comprises at least two, each bearing member is provided with the first rotor component, and at least two of the bearing members are distributed on both sides of the body.

22. The aircraft according to claim 1 or 17, **characterized in that** the number of the tail fin mechanisms comprises at least two, and at least two of the tail fin mechanisms are distributed on both sides of the body.

23. The aircraft according to claim 22, **characterized in that** at least two of the tail fin mechanisms each form a closed structure with the body, the main wing, and the bearing member.

24. The aircraft according to claim 1, **characterized in that** the first tail fin is configured to provide a downward force to the aircraft in a pitch direction, and a center of gravity of the aircraft is located in a front portion of the aircraft.

25. The aircraft according to claim 17, **characterized in that** the rotor mechanism further comprises:
a second rotor component, wherein the first rotor component is closer to a portion rear of the body compared to the second rotor component, and a line connecting centers of the first rotor component and the second rotor component is parallel or substantially parallel to a roll axis of the aircraft.

26. The aircraft according to claim 25, **characterized in that** the first rotor component is configured to provide lift to the aircraft; and/or the second rotor component is capable of providing lift to the aircraft in a first state and providing thrust to the aircraft in a second state, wherein the first state comprises a vertical takeoff and landing state, and the second state comprises a cruising state.

27. The aircraft according to claim 26, **characterized in that** the second rotor component comprises:
a second rotor and a second driving mechanism, the second driving mechanism being configured to drive the second rotor to switch between the first state and the second state, the second rotor being connected to the bearing member, and the bearing member extending from the main wing along a roll axis direction of the aircraft.

28. The aircraft according to claim 17, **characterized in that** the rotor mechanism further comprises:
a third rotor component, wherein the third rotor component is arranged on the main wing, and the third rotor component is capable of providing lift to the aircraft in a first state and providing thrust to the aircraft in a second state, wherein the first state comprises a vertical takeoff and landing state, and the second state comprises a cruising state.

29. The aircraft according to claim 28, **characterized in that** the third rotor component comprises a third rotor and a third driving mechanism, the third driving mechanism being configured to drive the third rotor to switch between the first state and the second state, the third rotor being connected to an end of the main wing.

30. The aircraft according to claim 28, **characterized in that** the third rotor component further comprises:
a tip, arranged on the third rotor, configured to cooperate with the main wing in the second state to increase the wingspan of the aircraft.

31. An aircraft, **characterized in that** the aircraft comprises:
a body;
a tail fin mechanism, arranged on the body, the tail fin mechanism comprising a first tail fin and a second tail fin, the first tail fin being configured to provide stability in at least a first direction when the aircraft is flying, the second tail fin being configured to provide stability in at least a second direction when the aircraft is flying, the first direction being different from the second direction, wherein
at least part of at least one of the first tail fin and the second tail fin extends from the body in a pitch direction of the aircraft to form a landing gear of the aircraft.

32. The aircraft according to claim 31, **characterized in that** the first tail fin is connected to the second tail fin.

33. The aircraft according to claim 32, **characterized in that** one end of the first tail fin is connected to the body, the other end thereof is connected to the second tail fin, and a connection between the first tail fin and the second tail fin forms a contact end of the landing gear for contacting a takeoff and landing platform.

34. The aircraft according to claim 33, **characterized in that** the first tail fin is connected to the second tail fin to form at least one of the following structures: a V-shaped structure, an X-shaped structure, an inverted V-shaped structure.

35. The aircraft according to claim 33, **characterized in that** the number of the first tail fins and the number of the second tail fins both comprise two, and the two first tail fins and the two second tail fins are configured to cooperatively form at least one of the following structures: a serrated structure, a W-shaped structure.

36. The aircraft according to claim 31, **characterized in that** the first direction is the pitch direction of the aircraft, and the second direction is a yaw direction of the aircraft.

37. The aircraft according to claim 31, **characterized in that** the aircraft further comprises a rotor mechanism, the rotor mechanism being configured to at least provide lift to the aircraft, and in response to the first rotor component providing lift, the tail fin mechanism is located below the rotor mechanism.

38. The aircraft according to any one of claims 31 to 37, **characterized in that** the aircraft further comprises a rotor mechanism, the rotor mechanism being configured to at least provide lift to the aircraft, the rotor mechanism comprising a first rotor component, the first rotor component being arranged close to the tail fin mechanism, and when the first rotor component is used to provide lift, one of the first tail fin and the second tail fin has an orthographic projection on a plane of a rotation circle of the first rotor component located outside the rotation circle, and the other has an orthographic projection on the plane of the rotation circle of the first rotor component at least partially located within the rotation circle.

39. The aircraft according to claim 38, **characterized in that** when the first rotor component is used to provide lift, the first tail fin has an orthographic projection on the plane of the rotation circle of the first rotor component located outside the rotation circle.

40. The aircraft according to claim 39, **characterized in that** an orthographic projection of an end of the second tail fin close to the first rotor component on the plane of the rotation circle intersects the rotation circle in a front-rear direction or a roll axis direction of the aircraft.

41. The aircraft according to claim 39, **characterized in that** an range of anhedral angle of the first tail fin is from [15°, 45°].

42. The aircraft according to claim 39, **characterized in that** a range of a front edge sweep angle of the first tail fin is (-60°, 50°].

43. The aircraft according to claim 39, **characterized in that** a range of a rear edge sweep angle of the first tail fin is (-60°, 50°].

44. The aircraft according to claim 39, **characterized in that** a range of an inwardly canted angle of the second tail fin is (15°, 45°].

45. The aircraft according to claim 39, **characterized in that** a range of an angle between the first tail fin and the second tail fin is (40°, 125°].

46. The aircraft according to claim 39, **characterized in that** when the first rotor component is used to provide lift, the orthographic projection of the second tail fin on the plane of the rotation circle of the first rotor component is outside the rotation circle.

47. The aircraft according to claim 31, **characterized in that** the aircraft further comprises:
a rotor mechanism, the rotor mechanism being configured to at least provide lift to the aircraft;
a main wing, connected to the body and laterally extending from the body, the main wing being configured to provide lift; and
a bearing member, connected to the main wing and configured to carry at least part of the rotor mechanism, wherein one of the first tail fin and the second tail fin is connected to the body, and the other of the first tail fin and the second tail fin is connected to the bearing member, wherein
the rotor mechanism comprises a first rotor component, the first rotor component comprising a first rotor and a first driving mechanism, the first driving mechanism being configured to drive the first rotor to provide lift.

48. The aircraft according to claim 47, **characterized in that** an end of the bearing member is connected to the tail fin mechanism, and the first rotor component and the tail fin mechanism are respectively arranged on both sides of the bearing member along a yaw axis direction of the aircraft.

49. The aircraft according to claim 47 or 48, **characterized in that** ends of the first tail fin and the second tail fin are connected, one end of the first tail fin away from the second tail fin is connected to the body, and one end of the second tail fin away from the first tail fin is connected to the bearing member.

50. The aircraft according to claim 47, **characterized in that** the body, the main wing, the bearing member, the first tail fin, and the second tail fin cooperatively form a closed structure.

51. The aircraft according to claim 47 or 48, **characterized in that** the number of the bearing members comprises at least two, each bearing member is provided with the first rotor component, and at least two of the bearing members are distributed on both sides of the body.

52. The aircraft according to claim 31 or 47, **characterized in that** the number of the tail fin mechanisms comprises at least two, and at least two of the tail fin mechanisms are distributed on both sides of the body.

53. The aircraft according to claim 52, **characterized in that** at least two of the tail fin mechanisms each form a closed structure with the body, the main wing, and the bearing member.

54. The aircraft according to claim 31, **characterized in that** the first tail fin is configured to provide a downward force to the aircraft in a pitch direction, and a center of gravity of the aircraft is located in a front portion of the aircraft.

55. The aircraft according to claim 47, **characterized in that** the rotor mechanism further comprises:
a second rotor component, wherein the first rotor component is closer to a portion rear of the body compared to the second rotor component, and a line connecting centers of the first rotor component and the second rotor component is parallel or substantially parallel to a roll axis of the aircraft.

56. The aircraft according to claim 55, **characterized in that** the first rotor component is configured to provide lift to the aircraft; and/or the second rotor component is capable of providing lift to the aircraft in a first state and providing thrust to the aircraft in a second state, wherein the first state comprises a vertical takeoff and landing state, and the second state comprises a cruising state.

57. The aircraft according to claim 56, **characterized in that** the second rotor component comprises:
a second rotor and a second driving mechanism, the second driving mechanism being configured to drive the second rotor to switch between the first state and the second state, the second rotor being connected to the bearing member, and the bearing member extending from the main wing along a roll axis direction of the aircraft.

58. The aircraft according to claim 47, **characterized in that** the rotor mechanism further comprises:
a third rotor component, wherein the third rotor component is arranged on the main wing, and the third rotor component is capable of providing lift to the aircraft in a first state and providing thrust to the aircraft in a second state, wherein the first state comprises a vertical takeoff and landing state, and the second state comprises a cruising state.

59. The aircraft according to claim 58, **characterized in that** the third rotor component comprises a third rotor and a third driving mechanism, the third driving mechanism being configured to drive the third rotor to switch between the first state and the second state, the third rotor being connected to an end of the main wing.

60. The aircraft according to claim 58, **characterized in that** the third rotor component further comprises:
a tip, arranged on the third rotor, configured to cooperate with the main wing in the second state to increase the wingspan of the aircraft.

61. An aircraft, **characterized in that** the aircraft comprises:
a rotor mechanism, the rotor mechanism being configured to at least provide lift to the aircraft, the rotor mechanism comprising a first rotor component and a bearing member configured to support the first rotor component; and
a tail fin mechanism, the tail fin mechanism comprising a first tail fin and a second tail fin, the first tail fin being configured to provide stability in at least a first direction when the aircraft is flying, the second tail fin being configured to provide stability in at least a second direction when the aircraft is flying, the first direction being different from the second direction, wherein
the first rotor component is arranged close to the tail fin mechanism, and when the first rotor component is at least used to provide lift, the tail fin mechanism and the first rotor component are located on upper and lower sides of the bearing member, respectively, and at least one of the first tail fin and the second tail fin at least partially overlaps a projection of a rotor disk of the first rotor component along a height direction.

62. An aircraft, **characterized in that** the aircraft comprises:
a body;
a rotor mechanism, the rotor mechanism being configured to at least provide lift to the aircraft, the rotor mechanism comprising a first rotor component and a bearing member configured to support the first rotor component, the first rotor component being located at a rearmost position of the body compared to other rotor components; and
a tail fin mechanism, the tail fin mechanism comprising a first tail fin and a second tail fin, the first tail fin being configured to provide stability in at least a first direction when the aircraft is flying, the second tail fin being configured to provide stability in at least a second direction when the aircraft is flying, the first direction being different from the second direction; and
a main wing, connected to the body and configured to provide lift, wherein
the tail fin mechanism cooperatively forms a closed structure with the body, the main wing, and the bearing member.
